Europäisches Patentamt

(19) European Patent Office

Office européen des brevets

(11) Numéro de publication: **0 147 254**
**B1**

(12) FASCICULE DE BREVET EUROPEEN

(45) Date de publication du fascicule du brevet:
**07.01.88**

(21) Numéro de dépôt: **84402187.3**

(22) Date de dépôt: **31.10.84**

(51) Int. Cl.⁴: **G 01 N 3/06,** G 01 L 1/06,
G 01 B 5/30

(54) **Témoin de fatigue.**

(30) Priorité: **04.11.83 FR 8318059**

(43) Date de publication de la demande:
**03.07.85 Bulletin 85/27**

(45) Mention de la délivrance du brevet:
**07.01.88 Bulletin 88/1**

(84) Etats contractants désignés:
**AT BE CH DE GB IT LI LU NL SE**

(56) Documents cités:
**EP - A - 0 032 101**
**EP - A - 0 090 730**

(73) Titulaire: **S.T.A.S. SOCIETE TECHNIQUE
D'ACCESSOIRES SPECIALISES Société Anonyme,
77, rue Henri Brisson, F.78500 Sartrouville (FR)**

(72) Inventeur: **Archer, Michel, 55, avenue des Gressets,
F-78170 La Celle St Cloud (FR)**

(74) Mandataire: **Boivin, Claude, 9, rue Edouard-Charton,
F-78000 Versailles (FR)**

## Description

La présente invention concerne un témoin de fatigue pour pièce mécanique soumis à des efforts répétés, qui comporte deux éléments épais écartés l'un de l'autre et réunis l'un à l'autre par un voile mince muni d'une fente, ces deux éléments étant incorporés à la pièce ou fixés à celle-ci de manière à se déplacer l'un par rapport à l'autre dans un plan qui est parallèle au plan du voile.

Les brevets européens 0032101 et 0090730 décrivent des témoins de fatigue de ce genre dans lesquels les éléments épais sont disposés de manière à être écartés l'un de l'autre dans une direction sensiblement perpendiculaire à leur direction de déplacement relatif lorsque la pièce travaille, le voile mince étant ainsi soumis à un effort de cisaillement dans son plan et en ce que la fente du voile mince s'étend depuis l'un des bords du voile dans ladite direction de déplacement relatif, de sorte que, lorsque la pièce travaille, deux fissures apparaissent à partir des extrémités du fond de la fente, s'étendent progressivement dans le voile, et finissent par atteindre le bord opposé du voile ou rejoindre des fissures issues de ce bord opposé, la zone centrale du voile étant ainsi détachée ou quasiment détachée.

Ce témoin est destiné essentiellement à indiquer la fatigue d'une pièce soumise à des efforts de traction ou de compression. Lorsque les éléments épais du témoin de fatigue sont directement fixés sur la pièce à surveiller, le déplacement relatif de ces deux éléments épais est égal au déplacement relatif des deux endroits de la pièce sur lesquels ils sont fixés. Ce dernier déplacement est une donnée que dépend de la pièce et dont la valeur ne peut être modifiée. Or, il se peut, en particulier dans le cas de pièces en alliage léger que cette valeur soit incompatible avec les caractéristiques du témoin de fatigue.

La présente invention a pour objet un perfectionnement apporté au témoin de fatigue de type ci-dessus dans le but de remédier à cette difficulté.

Selon la présente invention, les éléments épais sont reliés à chacune de leurs extrémités par une zone flexible à une même partie qui est elle-même reliée par une zone flexible à une partie de fixation sur la pièce à surveiller.

Lorsque les deux parties de fixation sur la pièce se déplacent l'une par rapport à l'autre, les parties comprises entre les zones flexibles forment leviers et la valeur du déplacement relatif des éléments épais est égale à la valeur du déplacement des parties de fixation multipliée par un coefficient fonction des distances des zones flexibles à l'axe longitudinal du témoin de fatigue. En choisissant convenablement l'emplacement de ces zones flexibles, on peut à volonté diminuer la valeur du déplacement des éléments épais ou au contraire l'augmenter.

On a décrit ci-après, à titre d'exemple non limitatif, un mode de réalisation du témoin de fatigue selon la présente invention, avec référence au dessin annexé dans lequel:

La fig. 1 est une vue en plan de ce mode de réalisation;

la fig. 2 est un schéma de ce mode de réalisation montrant le déplacement des différentes parties du témoin de fatigue;

la fig. 3 est un détail d'une variante.

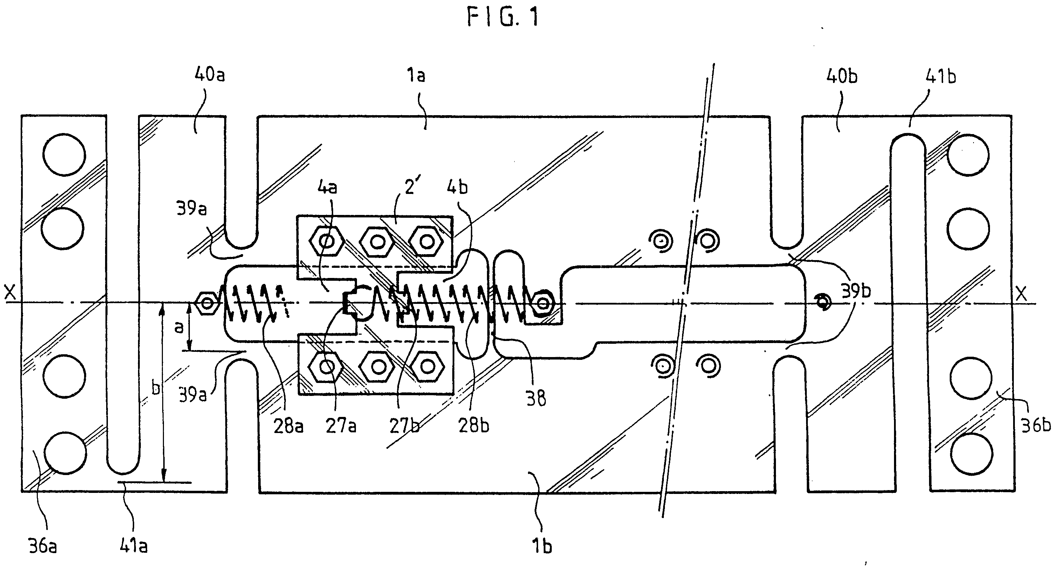

A la fig. 1 le témoin comporte deux parties épaisses 1a et 1b écartées l'une de l'autre et reliées l'une à l'autre par plusieurs voiles minces 2' dont un seul est représenté; chacun de ces voiles présente deux fentes 4a et 4b parallèles à la direction longitudinale des parties 1a et 1b, le fond de chacune de ces fentes comportant une patte 27a ou 27b qui est relevée à l'extérieur du plan du voile, l'une d'un côté de ce plan et l'autre du côté opposé; ces pattes servent à l'accrochage de ressorts 28a et 28b. Les parties 1a et 1b sont en outre reliées par des ponts flexibles 38 disposés entre deux voiles minces adjacents.

A chacune de leurs extrémités, les pièces 1a et 1b sont reliées par des zones flexibles 39a ou 39b à une même portion 40a ou 40b qui est elle-même reliée par une zone flexible 41a ou 41b à une partie 36a ou 36b servant à la fixation du témoin de fatigue sur la pièce à surveiller.

Les deux zones flexibles 39a sont disposées sensiblement symétriquement par rapport à l'axe longitudinal médian X–X du témoin de fatigue et sont écartées chacune de cet axe d'une distance a. Il en est de même des zones flexibles 39b.

Les zones flexibles 41a et 41b sont disposées l'une d'un côté de l'axe X–X et l'autre du côté opposé. Chacune d'elles est écartée transversalement de l'axe X–X d'une distance b qui est ici supérieure à a.

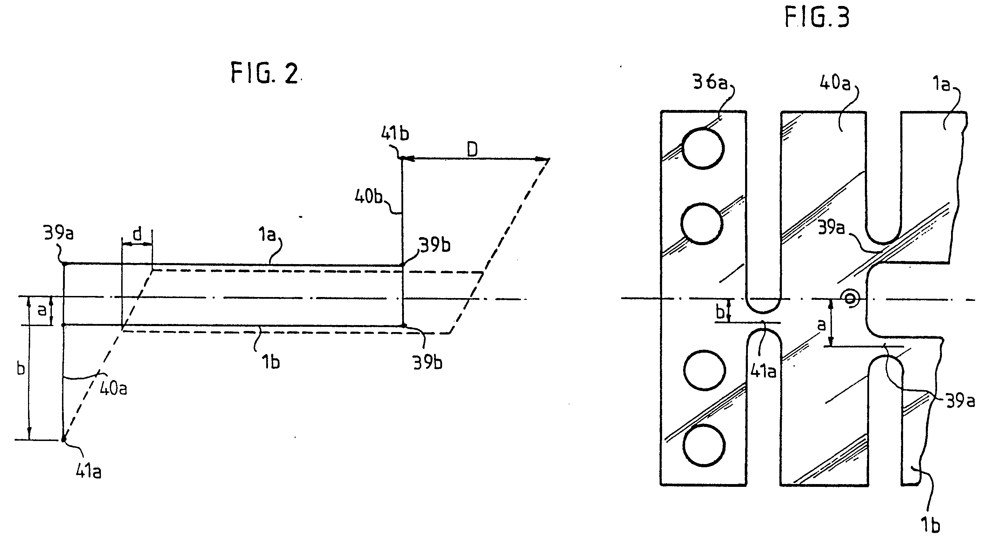

On constate à la fig. 2 que, lorsque les deux pièces de fixation 36a et 36b, c'est-à-dire les endroits de la structure à surveiller sur lesquels ces pièces sont fixées, s'écartent ou se rapprochent l'une de l'autre d'une distance D, les deux parties épaisses 1a et 1b se déplacent l'une par rapport à l'autre d'une distance d plus faible que D. On voit facilement que l'on a:

$$d = D \ \frac{a}{b}$$

Dans la disposition de la fig. 3, les zones flexibles 41a et 41b sont éloignées de l'axe X–X d'une distance b inférieure à a. Dans ce das, lorsque les deux pièces de fixation 36a et 36b se déplacent longitudinalement l'une par rapport à l'autre d'une distance D, les deux parties épaisses 1a et 1b se déplacent l'une par rapport à l'autre d'une distance d supérieure à D.

On voit ainsi qu'en choisissant convenablement le rapport a/b, on peut obtenir des valeurs de déplacement convenables pour les parties épaisses 1a et 1b, quelles que soient les distances dont se déplacent les pièces de fixation 36a et 36b, donc les endroits de la structure à surveiller où sont fixées ces pièces.

**Revendication**

1. Témoin de fatigue pour pièce mécanique soumise à des efforts répétés, qui comporte deux éléments épais (1a, 1b) écartés l'un de l'autre et réunis l'un à l'autre par un voile mince (2') muni d'une fente (4a, 4b), ces deux éléments (1a, 1b) étant incorporés à la pièce ou fixés à celle-ci de manière à se déplacer l'un par rapport à l'autre dans un plan qui est parallèle au plan du voile (2') dans lequel les éléments épais (1a, 1b) sont disposés de manière à être écartés l'un de l'autre dans une direction sensiblement perpendiculaire à leur direction de déplacement relatif lorsque la pièce travaille, le voile mince (2') étant ainsi soumis à un effort de cisaillement dans son plan, et en ce que la fente (4a, 4b) du voile mince (2') s'étend depuis l'un des bords du voile (2') dans ladite direction de déplacement relatif, de sorte que, lorsque la pièce travaille, deux fissures apparaissent à partir des extrémités du fond de la fente (2'), s'étendent progressivement dans le voile (2'), et finissent par atteindre le bord opposé du voile (2') ou rejoindre des fissures issues de ce bord opposé, la zone centrale du voile (2') étant ainsi détachée ou quasiment détachée, caractérisé en ce que les éléments épais (1a et 1b) sont reliés à l'une de leurs extrémités par des zones flexibles (39a ou 39b) à une même partie (40a ou 40b) qui est elle-même reliée par une zone flexible (41a ou 41b) à une partie de fixation (36a ou 36b) sur la pièce à surveiller.

**Patentanspruch**

1. Beanspruchungs-Prüfstück für ein wiederholten Beanspruchungen ausgesetztes mechanisches Werkstück, das zwei im Abstand voneinander angeordnete und über ein dünnes, mit einem Schlitz versehenes Blatt miteinander verbundene dickwandige Elemente aufweist, welche in das Werkstück derart eingebaut oder an ihm befestigt sind, dass sie gegeneinander verschiebbar sind in einer parallel zur Ebene des Blattes verlaufenden Ebene, in der die dickwandigen Elemente derart angeordnet sind, dass sie in einer Richtung, die im wesentlichen senkrecht zu ihrer beim Arbeiten des Werkstückes auftretenden relativen Verschiebungsrichtung verläuft, auf Abstand stehen, so dass das dünne Blatt einer Scherungsbeanspruchung unterworfen wird und bei dem der Schlitz des dünnen Blattes sich von einem der Ränder des Blattes aus in der besagten relativen Verschiebungsrichtung derart erstreckt, dass, wenn das Werkstück arbeitet, zwei Risse erscheinen, die von den Rändern am Grund des Schlitzes ausgehend, sich fortschreitend durch das Blatt erstrecken und durch Erreichen des entgegengesetzten Randes des Blattes oder durch Vereinigen mit von diesem entgegengesetzten Rand ausgehenden Rissen enden, so dass die zentrale Zone des Blattes abgerissen oder praktisch abgerissen wird, dadurch gekennzeichnet, dass die dickwandigen Elemente (1a oder 1b) an einem ihrer Enden über flexible Zonen (39a oder 39b) mit einem gleichen Teil (40a oder 40b) verbunden sind, dass selbst über eine flexible Zone (41a oder 41b) mit einem Befestigungsteil (36a oder 36b) am zu überwachenden Werkstück verbunden ist.

**Claim**

1. Fatigue tell-tale for mechanical parts subjected to repeated stresses, which includes two thick elements spaced apart from each other and joined together by a thin web having a slit, these two elements being incorporated in the part or fixed thereto so as to move with respect to each other in a plane which is parallel to the plane of the web, in which the thick elements are disposed so as to be spaced apart in a direction substantially perpendicular to their direction of relative movement when the part is working, the thin web being subjected to a shearing force in its plane, and in that the slit in the thin web extends from one of the edges of the web in said direction of relative movement so that, when the part is working, two cracks appear from the ends of the bottom of the slit, extend progressively into the web and finish by reaching the opposite edge of the web or joining up with the cracks from this opposite edge, the central zone of the web thus being detached or substantially detached, characterized in that the thick elements (1a and 1b) are connected at one of their ends by flexible zones (39a or 39b) through the same portion (40a or 40b) which is itself connected by a flexible zone (41a or 41b) to a securing portion (36a or 36b) on the part to be monitored.

FIG. 1

FIG. 2

FIG. 3

0147254